# EUROPEAN PATENT SPECIFICATION

(11) **EP 1 892 563 B1**
(45) Date of publication and mention of the grant of the patent: **19.10.2011**
(21) Application number: 06025667.4
(22) Date of filing: 12.12.2006
(51) Int. Cl.: G02F 1/13357, G02B 6/00

(54) **Surface light source device, backlight unit and liquid crystal display having the same**
Oberflächenlichtquelle, Rückbeleuchtungseinheit und damit ausgestattete Flüssigkristallanzeige
Source lumineuse de surface, unité de rétroéclairage et affichage à cristaux liquides comprenant celles-ci

(30) Priority: 22.08.2006 KR 20060079549
(43) Date of publication of application: 27.02.2008
(73) Proprietor: LG Electronics Inc., Seoul 150-010 (KR)
(72) Inventor: Lee, Weon Woong, Incheon 400-102 (KR)
(74) Representative: Katérle, Axel

(56) References cited:
- WO-A-00/16006
- WO-A-01/81960
- WO-A-03/040816
- WO-A1-03/100481
- DE-U1- 20 001 567
- JP-A- 9 015 595
- JP-A- 2004 069 653
- JP-A- 2006 010 724
- US-A1- 2004 156 184
- US-A1- 2005 128 374
- CHAOMING SONG, PING WANG, HERNAN A. MAKSE: 'A PHASE DIAGRAM FOR JAMMED MATTER' NATURE vol. 453, pages 629 - 632
- 'Random close pack', [Online] Retrieved from the Internet: <URL:http://en.wikipedia.oeg/wiki/random_cl ose_pack> [retrieved on 2010-09-06]

## Description

### BACKGROUND

### Field of the Invention

The present invention is directed to a surface light source device utilizing a light pipe."" The present invention is also directed to a backlight unit and a liquid crystal display which are provided with such surface light source device. International Patent Application PCT/US01/13173 discloses an optical light guide comprising optical elements enclosing a hollow cavity. The optical light guide distributes light to illuminate a liquid crystal display.
International Patent Application PCT/US02/34480 discloses a wedge shaped hollow light guide which may be used for illumination. The light guide includes reflective light extraction features which are arranged as a terrace.
Japanese Patent Application JP 09 015595 A discloses a lightweight backlight unit for illumination which includes prism arrays utilized together to suppress uneven brightness.
International Patent Application PCT/US99/20710 discloses an illumination system having a hollow light guide used in conjunction with one or more prisms.
German Patent Application DE 200 01 567 U1 discloses an illumination system comprising prisms of increasing size which are utilized to direct light for illumination.
United States Patent Application 10/511,706 discloses a backlight system operable to illuminate a liquid crystal display. The backlight system comprises multiple backlight units which are used in conjunction for illumination, each backlight unit comprising a light source and directing light for illumination through reflection.
United States Patent Application 10/747,354 discloses a hollow backlight module including a first light guide plate and a second light guide plate. A diffusing film is located above an outer surface of the first light guide plate. The diffusing film diffuses the light projected from the first light guide plate and outputs uniform lights.
Japanese Patent Application JP 2003061294 discloses a light-diffusing agent for a synthetic resin film comprising calcium-based inorganic particles having a polydispersity interval 0.1 µm ≤ d50 ≤ 5 µm of the average particle diameter d50 for 50 wt.% of the cumulative weight integrated from the large particle side of a particle size distribution. The inorganic particles are furthermore required to satisfy the uniformity condition 0 ≤ α < 2, wherein α = (d90-d10)/d50 with corresponding definitions of the average particle diameters d90 and d10 for 90 wt.% and 10 wt.% of the cumulative weight, respectively.
Japanese Patent Application 2004183242 describes an antiglare layer dispersedly containing fine particles occupying a cavity part in resin. The fine particles have an average particle diameter of 0.01 µm to 10 µm and a refractive index of 1.40 to 1.80. The antiglare layer contains 12 to 30 wt.% of the fine particles per 100 wt.% resin.
International Patent Application PCT/US03/12310 discloses a surface light-emitting device aiming at uniform light emission without decreasing the brightness of the light-emitting surface or increasing the height of the light guiding space. A light-transmission plate of the surface light-emitting device includes a diffusion filter. The diffusion filter is formed of a laminate, in which a plurality of diffuse transmission films is layered. The number of diffuse transmission film layers is highest in the area closest to a light source, and the number is gradually decreased as the distance from the light source increases.

The liquid crystal display, also know as LCD, is an electronic device that transforms electrical signals into visual signals by utilizing the change in the transmittance of the liquid crystals according to applied voltages.

As well known in the art, the liquid crystal display is a non-emitting display device. Therefore, the liquid crystal display needs to use an outside light source unit for illuminating the viewing plane of the liquid crystal panel from its outside in order to display visual information. A backlight unit is conventionally used for this use.

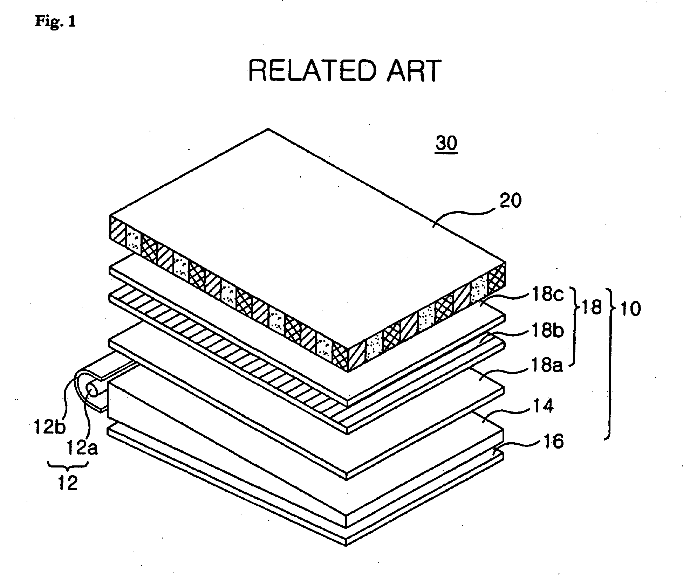

Fig. 1 is a perspective view illustrating a liquid crystal display.

Referring to Fig. 1, the liquid crystal display 30 comprises a liquid crystal panel 20 and a backlight unit 10 disposed at the back of the liquid crystal panel. The liquid crystal panel 20 receives the light provided by the backlight unit 10 to display images.

In general, the backlight unit 10 comprises a light source unit 12, a light guide plate 14, a reflective sheet 16 and optical sheets 18.

The light source unit 12 comprises a light source 12a and a light source reflector 12b. A cold cathode fluorescent lamp (CCFL) or an external electrode fluorescent lamp (EEFL) may be used for the light source 12a. The light source 12a is received inside the light source reflector 12b and disposed along one surface of the light guide plate 14. The light source reflector 12b is disposed outside the light source 12a to reflect the light generated at the light source 12a such that the light is inputted into the light guide plate 14.

The side surface of the light guide plate 14 disposed adjacent to the light source unit 12 becomes a light incidence surface for receiving the light. The light generated at the light source unit 12 is inputted into the light guide plate 14 through the light incidence surface, and emitted through the upper surface of the light guide plate 14. The upper surface of the light guide plate 14 becomes the light emitting surface for emitting the light.

The reflective sheet 16 reflects the light emitted through the lower surface of the light guide plate 14 such that the light is re-inputted into the inside of the light guide plate 14, which improves the light efficiency of the backlight unit 10.

The optical sheets 18 may comprise a diffuser sheet 18a, a prism sheet 18b and a protector sheet 18c. The optical sheets 18a, 18b and 18c control the light such that the light is effectively provided to the viewing plane of the liquid crystal panel 20.

However, the edge-light type backlight unit 10, which only uses the light that is inputted through the side surfaces of the light guide plate for illumination, has a problem that the light generated at the light source 12 is not fully used for illumination because light loss occurs considerably at the light guide plate 14.

Furthermore, the direct type backlight unit, which has a plurality of light sources positioned directly under the liquid crystal panel, also has a problem that light loss occurs at optical plates such as a diffusion plate. In addition, the light sources arranged adjacent to each other generate heat convection inside the backlight unit, and such heat convection deforms the optical sheets disposed over the light sources. The deformation of the optical sheets deteriorates the display quality.

To solve such problems, there have been recently various attempts to develop a surface light source device which emits light in the form of surface light. Information relevant to attempts to address the above problems can be found in U.S. patent Nos. 6,771,330 and 6,514,113 and U.S. patent application No. 2004-004757, which disclose a surface light source utilizing a flat fluorescent lamp (FEL), LEDs or carbon nano tubes (CNTs). However, the surface light source devices of the above publications still suffer from one or more of the following disadvantages: the complex manufacturing process, unsatisfactory optical property, and high power consumption.

For the foregoing reasons, there is a need for a surface light source device that can be easily manufactured, that has satisfactory optical properties and that consumes low electric power.

### BRIEF DESCRIPTION OF THE DRAWINGS

These and other features, aspects and advantages of the present invention will become better understood with regard to the following description, appended claims, and accompanying drawings where:

Fig. 1 is a perspective view illustrating a liquid crystal display;

Fig. 2a is an exploded perspective view illustrating a liquid crystal display according to one embodiment of the present invention;

Fig. 2b is a cross-sectional view illustrating the liquid crystal display of Fig. 2a;

Fig. 2c is a cross-sectional view illustrating the liquid crystal display according to another embodiment;

Fig. 2d is a cross-sectional view illustrating the light pipe of Fig. 2c taken along the line A-A;

Fig. 2e is a cross-sectional view illustrating a part of the liquid crystal display according to another embodiment of the present invention;

Fig. 2f is a cross-sectional view illustrating a part of the liquid crystal display according to further another embodiment of the present invention;

Fig. 3a is an exploded perspective view illustrating a surface light source device according to one embodiment of the present invention;

Fig 3b is a view illustrating a structure of the prisms of the light pipe of Fig. 3a;

Fig. 4a is a cross-sectional view of the liquid crystal display according to further another embodiment of the present invention;

Fig. 4b is a cross-sectional view of the surface light source of Fig. 4a taken along the line B-B;

Figs. 4c and 4d are enlarged partial cross-sectional views of the area E of Fig. 4b;

Figs. 5a and 5c are cross-sectional views illustrating other embodiments of the diffusive layer and the reflector whereas Fig. 5b is a cross-sectional view of an illustrative example of a diffusive layer and a reflector not according to the invention;

Fig. 6 is an exploded perspective view illustrating a surface light source device according to another embodiment of the present invention;

Fig. 7a and 7b are cross-sectional views illustrating a surface light source device according to further another embodiment of the present invention; and

Fig. 8a and 8b are cross-sectional views illustrating the surface light source device according to further another embodiment of the present invention.

### DETAILED DESCRIPTON OF THE INVENTION

An object of the present invention defined in the independent claim is to provide a surface light source device that can be easily manufactured.

Another object of the present invention is to provide a surface light source device that consumes low electric power and that is free of the heat-related problems.

Further another object of the present invention is to provide a surface light source device that is easily applicable to large size and thin display devices.

Still further another object of the present invention is to provide a backlight unit and a liquid crystal display that are provided with such surface light source device.

In the following drawings, the same reference numbers will be used to refer to the same or like parts through all embodiments. In addition, the detailed descriptions of the identical parts are not repeated.

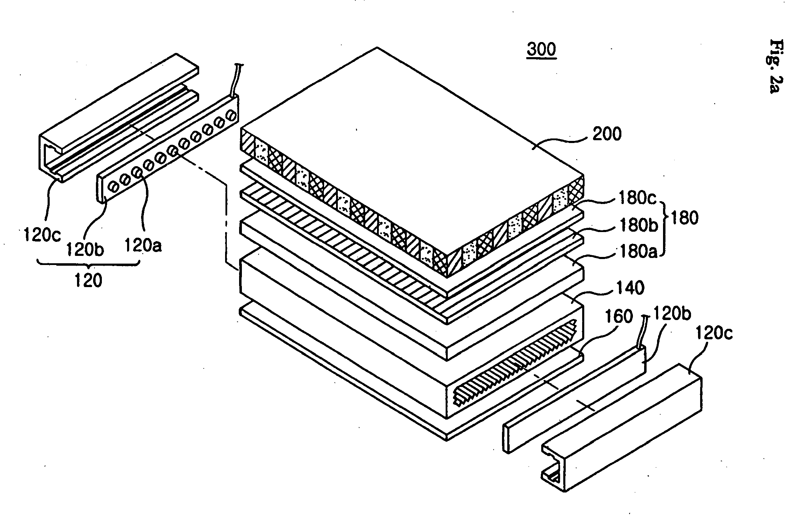

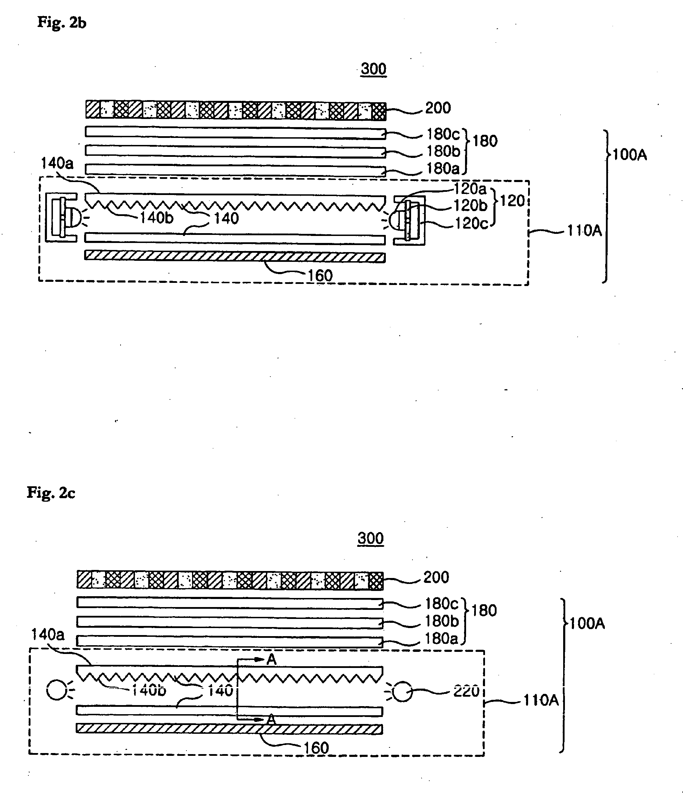

Fig. 2a is an exploded perspective view illustrating a liquid crystal display according to one embodiment of the present invention; and Fig. 2b is a cross-section view illustrating the liquid crystal display of Fig. 2a.

Referring to Figs. 2a and 2b, a liquid crystal display 300 of the present invention comprises a liquid crystal panel 200 and a backlight unit 100A.

The liquid crystal display 300 displays images according to driving signals and data signals provided by an outside device. To understand and work the present invention, it is not important to describe the detailed structure of the liquid crystal panel 200. And, the idea of the present invention is widely applicable to any type of liquid crystal panel usually employed in the liquid crystal display. Therefore, the structure of the liquid crystal panel 200 will not need to be herein described.

The backlight unit 100A is positioned at the back of the liquid crystal panel 200 to provide light, for example white light to the liquid crystal panel 200. The backlight unit 100A comprises a surface light source device 110A for providing surface light suited to illuminating the viewing plane of the liquid crystal panel 200. Selectively, the backlight unit 100A may include optical sheets 180 that are disposed between the liquid crystal panel 200 and the surface light source device 110A to transform the light provided by the surface light source device 110A to more suitable light for illuminating the liquid crystal panel 200.

The surface light source device 110A according to one embodiment comprises light source unit(s) 120, a light pipe 140 and a reflective sheet 160.

Each light source unit 120 comprises light sources 120a generating the light. The light sources 120a according to one embodiment are point light sources such as light emitting diodes (LEDs). In this case, the light sources 120a are mounted on a printed circuit board (PCB) 120b in a certain arrangement, and an outside electric power source is electrically connected to the light sources 120a through the wiring patterns of the PCB 120b.

According to one embodiment, the light sources 120a are disposed along two side surfaces of a light pipe 140. Therefore, the light generated at the light sources 120a is inputted into the light pipe 140 through its side surfaces. Each light source unit 120 comprises a housing 120c for receiving and supporting the PCB 120b mounted with the light sources 120a. The housing 120c may be made of metal and plastic materials, and each housing 120c has an inside groove for the PCB 120b to be inserted therein. Preferably, the inner wall of the housing 120c has a reflective coating to reflect the light emitted from the light sources 120a.

The two side faces of the light pipe 140 become light incidence faces through which the light generated at the light source unit 120 is inputted into the light pipe 140, and the upper surface of the light pipe 140 becomes the light emitting surface through which the light is outputted from the light pipe 140. The light inputted through the light incident faces progresses through inside of the light pipe 140 by total reflection, and is outputted toward the liquid crystal panel 200 direction through the light emitting surface. The light emitting surface is preferably at least as wide as or wider than the viewing plane of the liquid crystal panel 200 so that the light is uniformly provided to the viewing plane.

Although the light source unit 120 is disposed at the side area of the light pipe 140, the backlight unit 100A has almost equal light efficiency to the conventional direct-lighting type backlight unit because the light pipe 140 has excellent light transportation capability and little light loss therein. Additionally, for the same level of brightness, fewer LEDs can be used in the backlight unit 100A of the present invention than in the conventional direct-lighting type backlight unit.

According to another embodiment, the light source unit 120 may be disposed only at one side area of the light pipe 140. In such case, the light efficiency may be secured by installing reflecting means at the opposite side area of the light pipe 140 to reflect and reuse the light transported to the end of the light pipe 140. Preferably, the light pipe 140 is designed to obtain uniform emitting light in such a manner that the cross-sectional area of the light pipe 140 becomes smaller along the longitudinal direction.

Fig. 2c is a cross-sectional view illustrating the liquid crystal display according to another embodiment.

Referring to Fig. 2c, a light source 220 of a liquid crystal display 300 is a linear light source. The light source may be, for example, a CCFL or an EEFL.

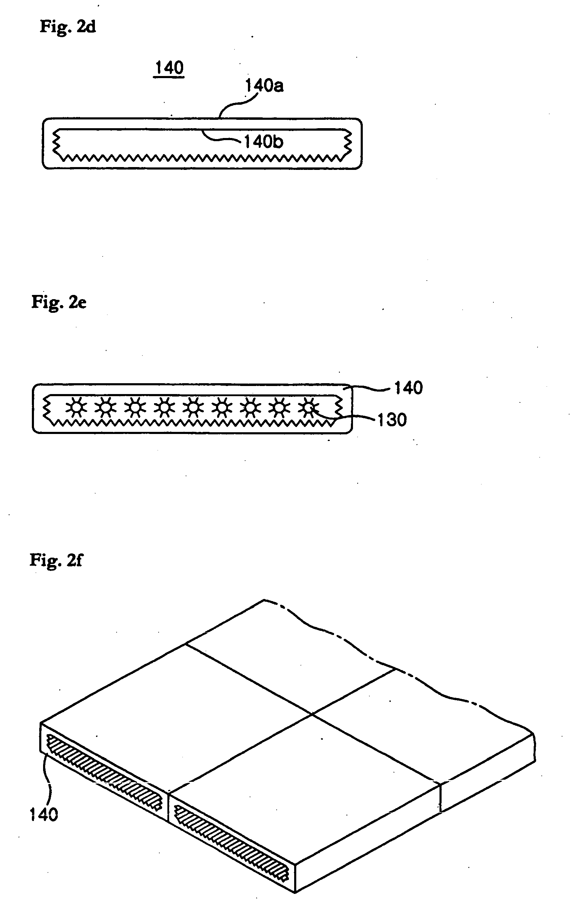

Fig. 2d is a cross-sectional view illustrating the light pipe of Fig. 2c taken along the line A-A.

Referring to Fig. 2d, the inside of the light pipe 140 is hollow and filled with air, and the cross-section of the light pipe 140 may be oval or rectangular. The light pipe 140 may be a kind of hollow light waveguide. The light pipe 140 has a suitable structure for transporting the light inputted through its one or both sides in the longitudinal direction.

According to one embodiment, the inner surface 140b of the light pipe 140 is structured with prisms arranged in micro pitches, wherein each prism is extended in the longitudinal direction.

Here, as shown in Fig. 2c, the inner surface 140b is structured with prisms. Only, in Fig. 2d, a cut side of the prisms of the inner surface 140b is shown, and so the inner surface 140b is described as a straight line.

The outer surface of the light pipe 140 is not structured but smooth, and a part of the outer surface 140a becomes the light emitting surface for emitting the light to the liquid crystal panel 200.

Alternatively, the outer surface 140a of the light pipe 140 may be structured, and the inner surface 140b of the light pipe 140 may be smooth.

Alternatively, both the outer and inner surfaces 140a and 140b of the light pipe 140 may be structured.

The distance between the outer surface 140a and the inner surface 140b varies widely according to the application circumstance. However, considering the light loss, it is preferable that the distance has a value of between about 50µm and about 300µm.

The light pipe 140 may be made of a thermoplastic resin that has good light transmittance, mechanical strength (especially impact resistance), thermal resistance and electrical stability. Preferably, the light pipe 140 is made of polyethylen terephthalate (PET), polycarbonate (PC) or polymethyl methacrylate (PMMA). More preferably, the light pipe 140 is made of polymethyl methacrylate (PMMA).

Referring back to Figs. 2a to 2c, the surface light source device 110A according to one embodiment comprises a reflective sheet 160. The reflective sheet 160 reflects the light output through the lower surface of the light pipe 140 to re-input the light into the light pipe 140, thereby the light efficiency may be improved.

The reflector sheet 160 may be manufactured by applying Ag on a sheet made of SUS, Brass, Al, PET, etc and coating it with Ti to prevent the thermal deterioration caused by heat absorption.

Alternatively, the reflective sheet 160 may be obtained by dispersing micro-pores capable of scattering the light in a resin sheet such as PET

Selectively, the backlight unit 100A may include a set of optical sheets 180 disposed between the surface light source device 110A and the liquid crystal panel 200. The set of optical sheets 180 may comprise a diffuser sheet 180a, a prism sheet 180b and a protector sheet 180c.

The light emitted through the light emitting surface is inputted into the diffuser sheet 180a. The diffuser sheet 180a scatters the light to make the brightness uniform and widen the viewing angle.

Because the brightness declines sharply while the light passes through the diffuser sheet 180a, the prism sheet 180b is provided in the backlight unit 100A to compensate such declination of brightness. The prism sheet 180b refracts the light emitted from the diffuser sheet 180a in a low angle to collimate the light toward the front direction; thereby the brightness is improved within the effective viewing angle.

The protector sheet 180c is disposed over the prism sheet 180b. The protector sheet 180c prevents the surface of the prism sheet 180b from being damaged, and also rewidens the viewing angle once narrowed by the prism sheet 180b.

The specified structure and materialistic property of the optical sheets 180 are not important to understand and work the present invention, and any conventional structure and material normally used in the art are widely applicable to the optical sheet 180 of the present invention.

Hereinafter, other embodiments of the present invention will be described.

Fig. 2e is a cross-sectional view illustrating a part of the liquid crystal display according to another embodiment of the present invention. Fig. 2f is a cross-sectional view illustrating a part of the liquid crystal display according to further another embodiment of the present invention. For the convenience, the same parts as those of the foregoing embodiment are not illustrated.

In the foregoing embodiment, LEDs in the form of point light sources are employed for the lights sources 120a. However, linear light sources such as CCFLs or EEFLs may be employed for the light sources 120a. In such case, as shown in Fig. 2e, the linear light sources 130 are disposed adjacent to each other inside the light pipe 140.

Here, since the surface light source device 110A according to one embodiment has a structure where the light sources 130 generating heat may be received inside the light pipe 140, the heat generated at the light sources 130 is circulated only inside the light pipe 140 and the heat is prevented from being easily transferred to the optical sheets 180. Therefore, the heat-related deformation of the optical sheets 180 may be prevented.

Additionally, in the foregoing embodiment, the surface light source device 110A is embodied with one light pipe 140. However, as shown in Fig. 2f, the surface light source device 110A may be also embodied with a plurality of light pipes 140 disposed in such a manner that the adjacent light pipes 140 contact each other. Such simple disposition of the light pipes 140 allows the optical communication between the light pipes 140 because each light pipe 140 has the same dimension.

This allows the application of the surface light source of the present invention to large size display Namely, simply arranging the light pipes 140 vertically and horizontally according to the size of the liquid crystal panel and installing light source units using a point light source (120 of Fig. 2b) or a linear light source (220 of Fig. 2c) at the side areas of the light pipes 140 or inserting linear light sources (130 of Fig. 2e) can embody a large size surface light source device.

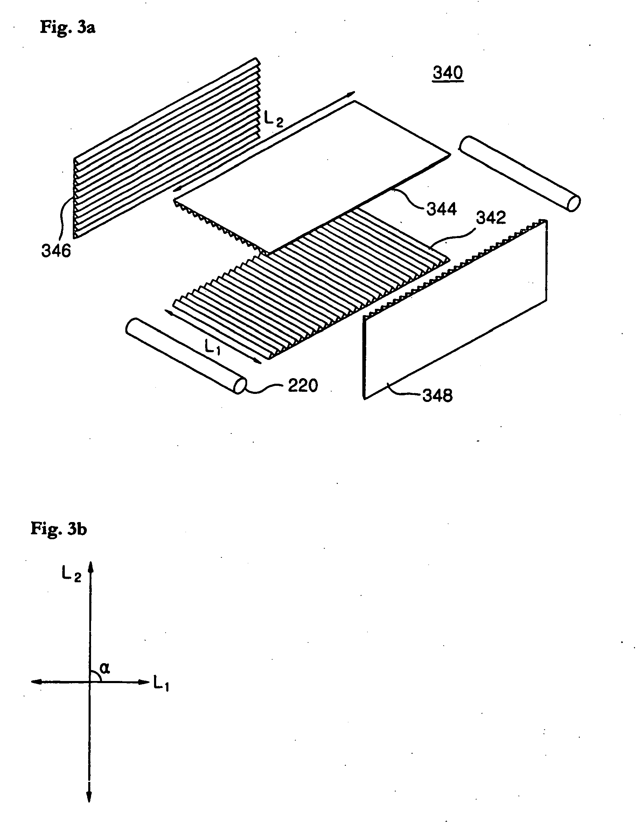

Fig. 3a is an exploded perspective view illustrating the surface light source device according to one embodiment of the present invention. And, Fig 3b is a view illustrating the structure of prisms of the light pipe of Fig. 3a.

Referring to Fig. 3a and 3b, the surface light source device 340 according to one embodiment comprises a light source 220 and a light pipe. The light pipe comprises a plurality of light waveguide units 342, 344, 346 and 348. Each of the light waveguide units 342, 344, 346 and 348 has a surface of which at least one side is structured.

Hereinafter, such a constitution that the structured surface includes an array of prisms will be described, but the present invention is not limited thereto, and the surface may be structured in various shapes.

The inner surface of the first light waveguide unit 342 of the light pipe is structured with a plurality of prisms, and the first light waveguide unit 342 has a surface through which light from the light source 220 is incident.

The second light waveguide unit 344 is disposed substantially parallel to the first light waveguide unit 342, and its one surface is structured with a plurality of prisms. Also, the second light waveguide unit 344 has a surface through which a light is emitted into the liquid panel 200 direction.

The longitudinal direction L₁ of the prisms of the first light waveguide unit 342 and the longitudinal direction L₂ of the prisms of the second light waveguide unit 344 form a certain angle α. According to one embodiment, the certain angle α may be a right angle.

Also, the longitudinal direction of the prisms of the third light waveguide unit 346 and the longitudinal direction of the prisms of the fourth light waveguide unit 348 may form a certain angle.

The light pipe of the present invention may be molded by an already known plastic molding process such as injection molding or extrusion molding. It is within the capability of a person skilled in the art to make the light pipe by such already known molding processes with the above mentioned materials without detailed description.

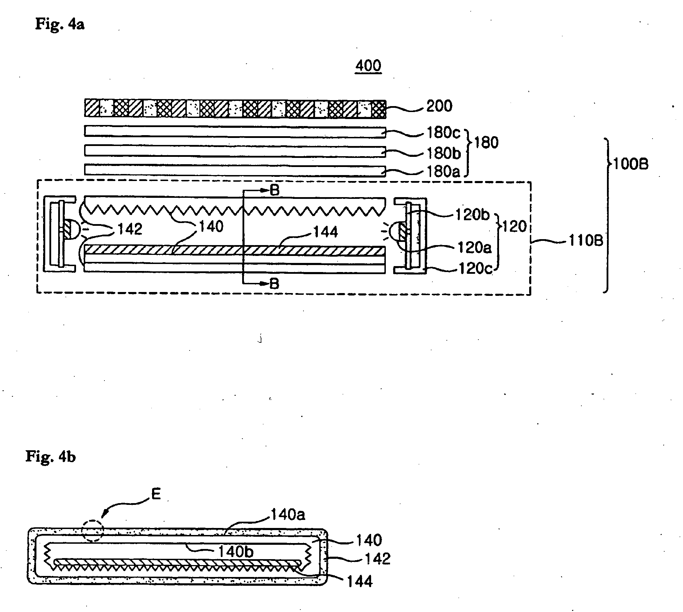

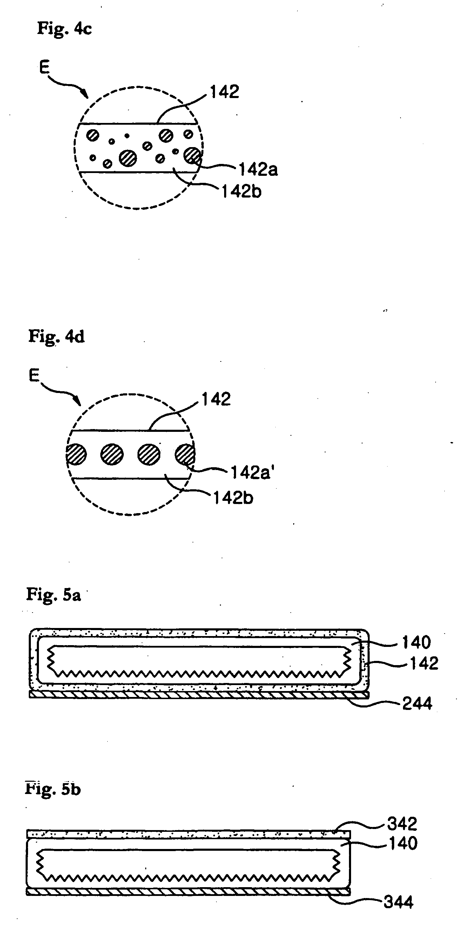

Fig. 4a is a cross-sectional view of the liquid crystal display according to further another embodiment of the present invention; Fig. 4b is a cross-sectional view of the surface light source of Fig. 4a taken along the line B-B; and Figs. 4c and 4d are enlarged partial cross-sectional views of the area E of Fig. 4b.

Referring to Figs. 4a and 4b, the liquid crystal display 400 comprises the liquid crystal panel 200 and a backlight unit 100B.

The backlight unit 100B comprises a surface light source device 110B for providing surface light. The backlight unit 100B may optionally include the optical sheets 180 to transform the light provided by the surface light source device 110B to more suitable light for the illumination of the panel 200.

The surface light source device 110B comprises the light source units 120, the light pipe 140, a diffusive layer 142 disposed outside the light pipe and a reflector 144 disposed inside the light pipe 140.

The diffusive layer 142 enables the light confined inside the light pipe 140 to be emitted outside the light pipe 140 and scatters the light for brightness uniformity.

Referring to Figs. 4c and 4d, the diffusive layer 142 comprises a base material 142b consisting of a resin and a plurality of diffusion particles 142a and 142a' distributed in the base material 142b.

The base material 142b is preferably an acrylic resin that has good light transmittance, thermal resistance and mechanical strength. More preferably, the base material 142b is polyacrylate or polymethyl methacrylate.

Beads consisting of the same or other resins as the base material 142b are used for the diffusion particles 142a and 142a'. The diffusion particles 142a and 142a' are contained by about 25wt% to 35wt% against the base material 142b. More preferably, the diffusion particles 142a and 142a' are contained by 30wt% against the base material 142b.

According to one embodiment, the size and the distribution of the diffusion particles 142a are random. Such random structure increases the haze effect to prevent the defects such as scratches that physical contacts would make on the base material 142b from being projected onto the liquid crystal panel (200 of Fig. 4a).

According to another embodiment, the size and the distribution of the diffusion particles 142a' are substantially uniform. Such uniform structure allows the brightness to increase although the haze effect rather decreases. In general, as the uniformity of the diffusion particles 142a' increases, the haze effect decreases but the brightness increases.

Diffusive layers can be formed by various methods already known in the art. For example, a diffusive layer can be obtained by a method where diffusion particles such as beads are mixed with a liquid phase resin and the mixture is applied to a base film, followed by the mixture being cured; and the film is thermocompressed onto the outside surface of a light pipe. Accoding to the present invention, the diffusive layer 142 are however obtained by another method where a liquid phase resin with beads distributed therein is applied to the outside surface of the light pipe 140.

Referring back to Figs. 4a and 4b, the reflector 144 is disposed inside the light pipe 140. The reflector 144 prevents the light from being emitted through the lower surface of the light pipe 140 and thus improves the light efficiency. Furthermore, the reflector 144 enables the light confined in the light pipe 140 to be emitted outside the light pipe 140.

The reflector 144 may consist of high reflective materials. For example, the reflector 144 comprises a reflective coating consisting of metals such as Al or Ag.

The optical sheets 180 may optionally be disposed between the liquid crystal panel 200 and the surface light source device 110B, and the optical sheets 180 may comprise the diffuser sheet 180a, the prism sheet 180b and the protector sheet 180c.

In the foregoing embodiment, the diffusive layer 142 fully covers the outer surface of the light pipe 140, and the reflector 144 is inserted in the light pipe 140. However, the structure and disposition of the diffusive layer 142 and the reflector 144 can be modified variously by a person skilled in the art. Hereinafter, some modifications of the diffusive layer 142 and the reflector 144 will be described with reference to the drawings.

Figs. 5a to 5c are cross-sectional views illustrating other embodiments of the diffusive layer and the reflector of Fig. 4b. Only the structural differences from the diffusive layer 142 and the reflector 144 are mainly described for convenience.

Referring to Fig. 5a, according to another embodiment, the diffusive layer 142 is disposed to fully cover the outer surface of the light pipe 140, and the reflector 244 is disposed on the lower surface of the diffusive layer 142 as shown in the drawing.

Referring to Fig. 5b, merely as an illustrative example not according to the invention, the diffusive layer 342 and the reflector 344 both are disposed only in a certain area of the outer surface of the light pipe 140. Here, the diffusive layer 342 is formed at a position facing the liquid crystal panel (not shown), and the reflector 344 is disposed on the lower surface of the light pipe 140 and faces the diffusive layer 342 with the light pipe 140 therebetween.

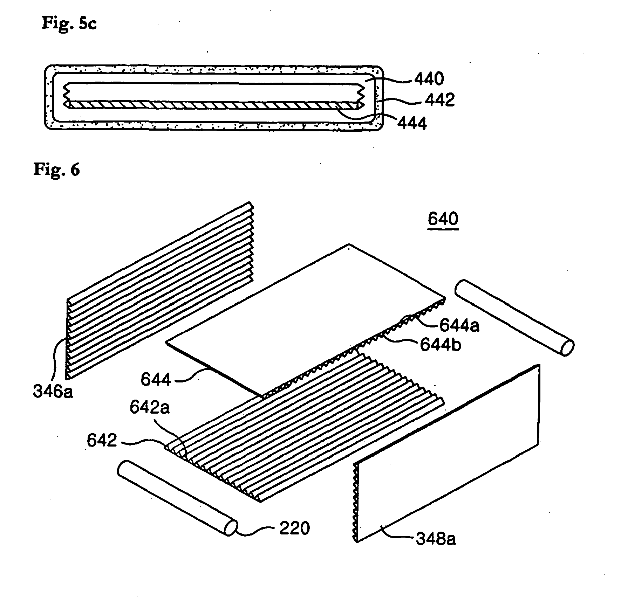

Referring to Fig. 5c, according to further another embodiment, the diffusive layer 442 is formed to fully cover the outer surface of the light pipe 440, and the reflector 444 is disposed in the light pipe 440. In this case, the inside area of the light pipe 140 where the reflector 444 is disposed is free of the prism structure.

Fig. 6 is an exploded perspective view illustrating the surface light source device according to another embodiment of the present invention.

Referring to Fig. 6, the surface light source device 640 comprises a light source 220 and a light pipe. The inner surface 642a of the first light waveguide unit 642 of the light pipe is structured with a plurality of prisms.

The outer surface 644a of the second light waveguide unit 644 is a smooth plane, and the inner surface 644b is structured with a plurality of prisms.

Here, the longitudinal direction of the prisms of the first light waveguide unit 642 and the longitudinal direction of the prisms of the second light waveguide unit 644 form a certain angle. Accordingly, the brightness of the emitting light from the light pipe to the liquid panel 200 direction can be enhanced.

The third light waveguide unit 346a and the forth light waveguide unit 348a are combined with both sides of the first light waveguide unit 642 and the second light waveguide unit 644.

Each one surface of the third light waveguide unit 346a and the fourth light waveguide unit 348a is structured with a plurality of prisms

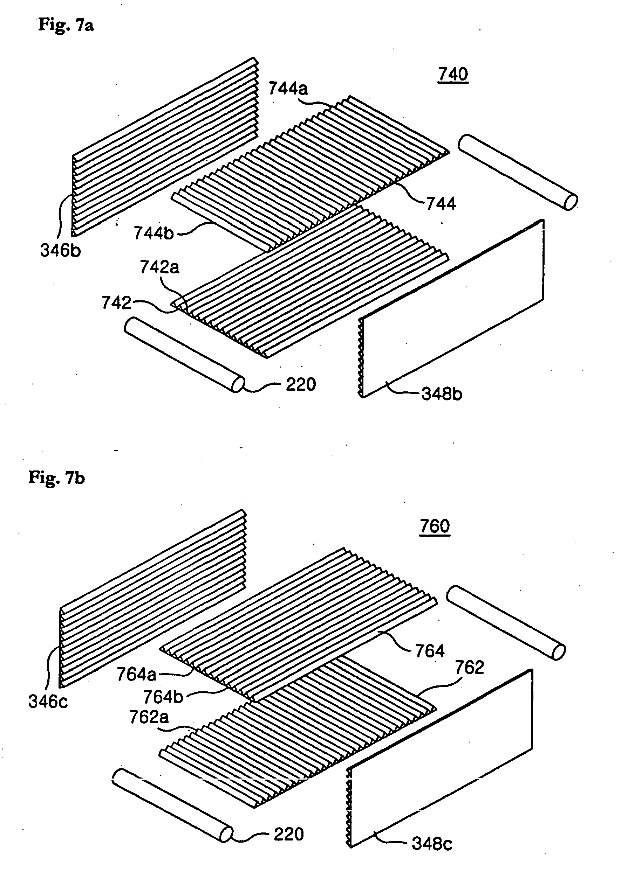

Fig. 7a and 7b are cross-sectional views illustrating the surface light source device according to further another embodiment of the present invention.

Referring to Fig. 7a and 7b, the surface light source devices 740 and 760 comprise a light source 220 and a light pipe, and the inner surfaces 742a and 762a of the first light waveguide units 742 and 762 of the light pipes are structured with a plurality of prisms.

The inner surfaces 744b and 764b of the second light waveguides unit 744 and 764 are smooth planes, and the outer surfaces 744a and 764a are structured with a plurality of prisms.

Here, the longitudinal directions of the prisms of the first light waveguide units 742 and 762 and the longitudinal directions of the prisms of the second light waveguide units 744 and 764 form a certain angle.

The third light waveguide units 346b and 346c and the fourth light waveguide units 348b and 348c are combined with both sides of the first light waveguide units 742 and 762 and the second light waveguide units 744 and 764, respectively.

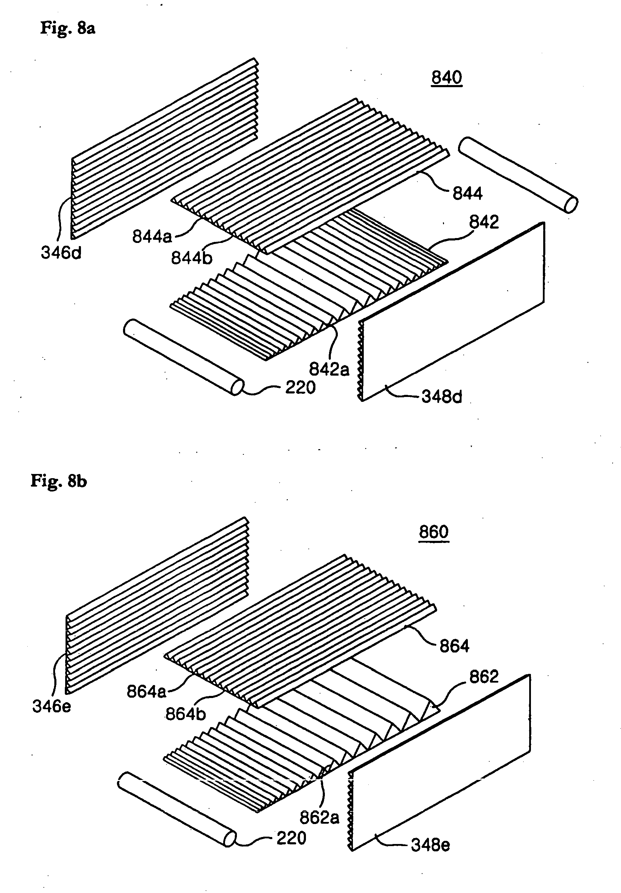

Fig. 8a and 8b are cross-sectional views illustrating the surface light source device according to further another embodiment of the present invention.

Referring to Fig. 8a and 8b, the surface light source devices 840 and 860 comprise a light source 220 and a light pipe. The inner surface 842a and 862a of the first light waveguide unit 842 and 862 of the light pipe is structured with a plurality of prisms.

The inner surface 844b and 864b of the second light waveguide unit 844 and 864 is a smooth plane, and the outer surface 844a and 864a is structured with a plurality of prisms.

The longitudinal direction of the prisms of the first light waveguide unit 842 and 862 forms a certain angle with the longitudinal direction of the prisms of the second light waveguide unit 844 and 864.

In Fig. 8a, the structured prisms of the inner surface 842a of the first light waveguide unit 842 become larger toward the center from the edge.

If the prisms of the inner surface 842a of the first light waveguide unit 842 are structured as shown in Fig. 8a, though light is inputted through both sides, the brightness of the light emitted through the second light waveguide unit 844 may be controlled to be uniform.

In Fig. 8b, the light source 220 is disposed at one side area of the light pipe. In this case, the structured prisms of the inner surface 862a of the first light waveguide unit 862 become larger from one edge of the light pipe adjacent to the light source 220 toward the other edge. Therefore, the brightness of the light emitted through the second light waveguide unit 864 may be controlled to be uniform.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A surface light source device for providing surface light, comprising:
at least one light source (120a; 130; 220) generating light; and
at least one hollow light pipe (140), the hollow light pipe (140) including:
a first light guide plate (342) with a structured surface on at least one side;
a second light guide plate (344) with a structured surface on at least one side and
disposed substantially parallel to the first light guide plate (342), the second light guide platel (344) having a light-emitting surface; and
a diffusive layer (142);
wherein each structued surface includes an array of prisms,
the prisms of the array of the first tight guide ptate (342) extending along a first longitudinal direction (L1) and the prisms of the array of the second light guide plate (344) extending along a second longitudinal direction (L2), the first and second longitudinal directions being different from each other,
**characterized in that** the diffusive layer (142) is disposed to fully cover the outer surface of the light pipe (140), wherein the diffusive layer (142) is formed by applying a liquid phase resin with beads distributed therein to the outside surface of the light pipe (140) followed by a curing step, such that the diffusive layer (142) comprises said beads as diffusion particles (142a) and a base material (142b) formed of a cured light-transmissive resin, and
wherein the diffusion particles (142a) are distributed in the base material (142b) in an amount of approximately 25 to 35 parts by weight based on 100 parts by weight of the base material (142b).

2. The surface light source device as set forth in claim 1, wherein the at least one light source (120a) is LEDs, and wherein the surface light source device (110A) further comprises:
a printed circuit board (120b) electrically connecting a electric power source to the LEDs,wherein the LEDs are mounted on the printed circuit board (120b); and
a housing (120c) receiving and supporting the printed circuit board (120b).

3. The surface light source device as set forth in claim 1, wherein the light source (220) is CCFLs or EEFLs disposed inside or along at least one side of the light pipe (140) or light pipes (140).

4. The surface light source device as set forth in claim 1, wherein an angle (α) between the first longitudinal direction (L1) and the second longitudinal direction (L2) is a substantially right angle.

5. The surface light source device as set forth in claim 1, wherein the prisms of the array of the first light guide plate (342) are enlarged with increasing distance from the light source (120a, 220).

6. A backlight unit (100A) for illuminating a liquid crystal panel (200) from the back of the liquid crystal panel (200), the backlight unit (100A) comprising a surface light source device (110A) as set forth in any of claims 1 to 5.

7. The backlight unit (100A) as set forth in claim 6, further comprising at least one optical sheet (180) disposed on one side of the surface light source device (110A), wherein the optical sheet (180) comprises a prism sheet (180b).

8. The backlight unit (100A) as set forth in claim 6, further comprising a reflective sheet (160) disposed under the light pipe (140) to reflect light emitted through a bottom surface of the light pipe (140) and re-input the light into the light pipe (140).

9. The backlight unit (100A) as set forth in claim 6, further comprising a reflector (144, 444) having a surface capable of reflecting light, wherein the reflector (144, 444) is disposed inside the light pipe (140, 440).

10. The backlight unit (100A) as set forth in claim 6, further comprising a reflector (244) having a surface capable of reflecting light, wherein the reflector (244) is disposed outside the light pipe (140).

11. The backlight unit (100A) as set forth in claim 6, wherein at least two light pipes (140) are disposed in such a manner that mutually adjacent light pipes (140) contact each other.

12. A liquid crystal display comprising a backlight unit (100A) as set forth in any one of claims 6 to 11.

13. The liquid crystal display as set forth in claim 12, wherein at least two light pipes (140) are disposed in such a manner that mutually adjacent light pipes contact each other.

## Patentansprüche

1. Oberflächenlichtquellenvorrichtung zum Bereitstellen von Oberflächenlicht, umfassend:
wenigstens eine Lichtquelle (120a; 130; 220) zum Erzeugen von Licht; und
wenigstens einen Hohllichtleiter (140), wobei der Hohllichtleiter (140) umfasst:
eine erste Lichtleiterplatte (342) mit einer strukturierten Oberfläche auf wenigstens einer Seite;
eine zweite Lichtleiterplatte (344) mit einer strukturierten Oberfläche auf wenigstens einer Seite und im Wesentlichen parallel zur ersten Lichtleiterplatte (342) angeordnet, wobei die zweite Lichtleiterplatte (344) eine lichtemittierende Fläche aufweist; und
eine zerstreuende Schicht (142);
wobei jede strukturierte Oberfläche eine Anordnung von Prismen aufweist, wobei die Prismen der Anordnung der ersten Lichtleiterplatte (342) sich in eine erste Längsrichtung (L1) erstrecken und die Prismen der Anordnung der zweiten Lichtleiterplatte (344) sich in eine zweite Längsrichtung (L2) erstrecken, wobei die erste und die zweite Längsrichtung voneinander verschieden sind,
**dadurch gekennzeichnet, dass** die zerstreuende Schicht (142) dazu angeordnet ist,
die äußere Oberfläche des Lichtleiters (140) vollständig zu überdecken, wobei die zerstreuende Schicht (142) ausgebildet ist durch Anbringen an der äußeren Oberfläche des Lichtleiters (140) einer flüssigen Phase aus Harz mit darin verteilten Kügelchen, gefolgt von einem Schritt des Aushärtens, so dass die zerstreuende Schicht (142) die Kügelchen als Zerstreuungspartikel (142a) und ein Grundmaterial (142b) umfasst, das aus einem gehärteten, lichtdurchlässigen Harz ausgebildet ist,
und
wobei die Zerstreuungspartikel (142a) im Grundmaterial (142b) mit einem Anteil von annähernd 25 bis 35 Gewichtsteilen bezogen auf 100 Gewichtsteile des Grundmaterials (142b) verteilt sind.

2. Oberflächenlichtquellenvorrichtung nach Anspruch 1, wobei die wenigstens eine Lichtquelle (120a) LEDs umfasst, und wobei die Oberfilächenlichtquellenvorrichtung (110A) ferner umfasst:
eine Platine (120b) mit einer gedruckten Schaltung in elektrischer Verbindung mit einer elektrischen Leistungsquelle der LEDs, wobei die LEDs auf der Platine (120b) mit gedruckter Schaltung angebracht sind; und
ein Gehäuse (120c), das die Platine (120b) mit gedruckter Schaltung aufnimmt und hält.

3. Oberflächenlichtquellenvorrichtung nach Anspruch 1, wobei die Lichtquelle (220) CCFLs oder EEFLs umfasst, die innerhalb oder entlang wenigstens einer Seite des Lichtleiters (140) oder der Lichtleiter (140) angeordnet sind.

4. Oberflächenlichtquellenvorrichtung nach Anspruch 1, wobei ein Winkel (α) zwischen der ersten Längsrichtung (L1) und der zweiten Längsrichtung (L2) ein im Wesentlichen rechter Winkel ist.

5. Oberflächenlichtquellenvorrichtung nach Anspruch 1, wobei die Prismen der Anordnung der ersten Lichtleiterplatte (342) mit zunehmendem Abstand von der Lichtquelle (120a, 220) vergrößert sind.

6. Hintergrundbeleuchtungseinheit (100A) zum Beleuchten einer Flüssigkristallanordnung (200) von der Rückseite der Flüssigkristallanordnung (200), wobei die Hintergrundbeleuchtungseinheit (100A) eine Oberflächenlichtquellenvorrichtung (110A) nach einem der Ansprüche 1 bis 5 umfasst.

7. Hintergrundbeleuchtungseinheit (100A) nach Anspruch 6, ferner wenigstens eine optische Platte (180) umfassend, die auf einer Seite der Oberflächenlichtquellenvorrichtung (110A) angeordnet ist, wobei die optische Platte (180) eine Prismenplatte (180b) umfasst.

8. Hintergrundbeleuchtungseinheit (100A) nach Anspruch 6, ferner eine reflektierende Platte (160) umfassend, die unter dem Lichtleiter (140) zur Reflektion von durch eine Unterfläche des Lichtleiters (140) emittierten Lichts und zur Rückeinspeisung des Lichts in den Lichtleiter (140) angeordnet ist.

9. Hintergrundbeleuchtungseinheit (100A) nach Anspruch 6, ferner einen Reflektor (144, 444) umfassend mit einer zur Reflektion von Licht ausgebildeten Oberfläche, wobei der Reflektor (144, 444) innerhalb des Lichtleiters (140, 440) angeordnet ist.

10. Hintergrundbeleuchtungseinheit (100A) nach Anspruch 6, ferner einen Reflektor (244) umfassend mit einer zur Reflektion von Licht ausgebildeten Oberfläche, wobei der Reflektor (244) außerhalb des Lichtleiters (140) angeordnet ist.

11. Hintergrundbeleuchtungseinheit (100A) nach Anspruch 6, wobei wenigstens zwei Lichtleiter (140) derart angeordnet sind, dass einander benachbarte Lichtleiter (140) sich gegenseitig berühren.

12. Flüssigkristallanzeige mit einer Hintergrundbeleuchtungseinheit (100A) nach einem der Ansprüche 6 bis 11.

13. Flüssigkristallanzeige nach Anspruch 12, wobei wenigstens zwei Lichterleiter (140) derart angeordnet sind, dass einander benachbarte Lichtleiter sich gegenseitig berühren.

## Revendications

1. Dispositif de source de lumière de surface destiné à délivrer une lumière de surface, comprenant :
au moins une source de lumière (120a ; 130 ; 220) générant de la lumière ; et
au moins un conduit de lumière creux (140), le conduit de lumière creux (140) incluant :
une première plaque de guidage de lumière (342) avec une surface structurée sur au moins un côté ;
une deuxième plaque de guidage de lumière (344) avec une surface structurée sur au moins un côté et disposée sensiblement parallèle à la première plaque de guidage de lumière (342), la deuxième plaque de guidage de lumière (344) comportant une surface d'émission de lumière ; et
une couche diffusive (142) ;
dans lequel chaque surface structurée comprend une matrice de prismes, les prismes de la matrice de la première plaque de guidage de lumière (342) s'étendant le long d'une première direction longitudinale (L1) et les prismes de la matrice de la deuxième plaque de guidage de lumière (344) s'étendant le long d'une deuxième direction longitudinale (L2), les première et deuxième directions longitudinales étant différentes l'une de l'autre,
**caractérisé en ce que** la couche diffusive (142) est disposée pour recouvrir entièrement la surface externe du conduit de lumière (140), dans lequel la couche diffusive (142) est formée en appliquant une résine en phase liquide avec des perles réparties dans celle-ci sur la surface extérieure du conduit de lumière (140) suivie par une étape de durcissement, d'une manière telle que la couche diffusive (142) comprend lesdites perles en tant que particules de diffusion (142a) et un matériau de base (142b) formé d'une résine durcie transmettant la lumière, et
dans lequel les particules de diffusion (142a) sont réparties dans le matériau de base (142b) en une quantité d'approximativement 25 à 35 parties en poids sur la base de 100 parties en poids du matériau de base (142b).

2. Dispositif de source de lumière de surface selon la revendication 1, dans lequel la au moins une source de lumière (120a) correspond à des diodes électroluminescentes, et dans lequel le dispositif de source de lumière de surface (110A) comprend en outre :
une carte de circuit imprimé (120b) connectant électriquement une source d'alimentation électrique aux diodes électroluminescentes, dans lequel les diodes d'électroluminescentes sont montées sur la carte de circuit imprimé (120b) ; et
un logement (120c) recevant et supportant la carte de circuit imprimé (120b).

3. Dispositif de source de lumière de surface selon la revendication 1, dans lequel la source de lumière (220) correspond à des lampes fluorescentes à électrodes froides ou à des lampes fluorescentes à électrodes externes disposées à l'intérieur ou le long d'au moins un côté du conduit de lumière (140) ou des conduits de lumière (140).

4. Dispositif de source de lumière de surface selon la revendication 1, dans lequel un angle (α) entre la première direction longitudinale (L1) et la deuxième direction longitudinale (L2) est sensiblement un angle droit.

5. Dispositif de source de lumière de surface selon la revendication 1, dans lequel les prismes de la matrice de la première plaque de guidage de lumière (342) sont agrandis en augmentant la distance depuis la source de lumière (120a, 200).

6. Unité de rétroéclairage (100A) destinée à éclairer un panneau à cristaux liquides (200) depuis l'arrière du panneau à cristaux liquides (200), l'unité de rétroéclairage (100A) comprenant un dispositif de source de lumière de surface (110A) selon l'une quelconque des revendications 1 à 5.

7. Unité de rétroéclairage (100A) selon la revendication 6, comprenant en outre au moins une feuille optique (180) disposée sur un côté du dispositif de source de lumière de surface (110A), dans lequel la feuille optique (180) comprend une feuille de prisme (180b).

8. Unité de rétroéclairage (100A) selon la revendication 6, comprenant en outre une feuille réfléchissante (160) disposée sous le conduit de lumière (140) pour réfléchir la lumière émise à travers une surface de fond du conduit de lumière (140) et faire à nouveau entrer la lumière dans le conduit de lumière (140).

9. Unité de rétroéclairage (100A) selon la revendication 6, comprenant en outre un réflecteur (144, 444) comportant une surface capable de réfléchir la lumière, dans lequel le réflecteur (144, 444) est disposé à l'intérieur du conduit de lumière (140, 440).

10. Unité de rétroéclairage (100A) selon la revendication 6, comprenant en outre un réflecteur (244) comportant une surface capable de réfléchir la lumière, dans lequel le réflecteur (244) est disposé à l'extérieur du conduit de lumière (140).

11. Unité de rétroéclairage (100A) selon la revendication 6, dans lequel au moins deux conduits de lumière (140) sont disposés d'une manière telle que les conduits de lumière (140) mutuellement adjacents sont en contact l'un avec l'autre.

12. Affichage à cristaux liquides comprenant une unité de rétroéclairage (100A) selon l'une quelconque des revendications 6 à 11.

13. Affichage à cristaux liquides selon la revendication 12, dans lequel au moins deux conduits de lumière (140) sont disposés d'une manière telle que les conduits de lumière mutuellement adjacents sont en contact l'un avec l'autre.
